(19) Europäisches Patentamt
European Patent Office
Office européen des brevets

(11) EP 1 533 321 B1

(12) EUROPEAN PATENT SPECIFICATION

(45) Date of publication and mention of the grant of the patent:
**09.01.2008 Bulletin 2008/02**

(21) Application number: **03741400.0**

(22) Date of filing: **15.07.2003**

(51) Int Cl.:
***C08F 2/44*** *(2006.01)* ***C08F 2/48*** *(2006.01)*
***C08F 20/06*** *(2006.01)* ***G02F 1/1334*** *(2006.01)*

(86) International application number:
**PCT/JP2003/008966**

(87) International publication number:
**WO 2004/009650 (29.01.2004 Gazette 2004/05)**

# (54) PHOTOCURABLE RESIN COMPOSITION FORMING POROUS MATERIAL AND POROUS CURED RESIN ARTICLE

PHOTOHÄRTBARE HARZZUSAMMENSETZUNG, DIE EIN PORÖSES MATERIAL BILDET, UND GEGENSTAND AUS PORÖSEM GEHÄRTETEM HARZ

COMPOSITION DE RESINE PHOTODURCISSABLE FORMANT UN MATERIAU POREUX ET ARTICLE POREUX EN RESINE DURCIE

(84) Designated Contracting States:
**DE FR GB**

(30) Priority: **19.07.2002 JP 2002211301**

(43) Date of publication of application:
**25.05.2005 Bulletin 2005/21**

(73) Proprietor: **OMRON CORPORATION**
**Kyoto-shi, Kyoto 600-8530 (JP)**

(72) Inventor: **HEGI, Yasuhiro**
**c/o Omron Corporation**
**801,Minamifudodo-cho0**
**Kyoto-shi**
**Kyoto 600-8530 (JP)**

(74) Representative: **Wilhelms . Kilian & Partner**
**Patentanwälte**
**Eduard-Schmid-Strasse 2**
**81541 München (DE)**

(56) References cited:
**EP-A- 0 900 808** **WO-A1-01/40828**
**WO-A1-97/44363** **JP-A- 53 060 981**
**JP-A- 55 090 516** **JP-A- 2002 182 188**

- **PATENT ABSTRACTS OF JAPAN vol. 2002, no. 10, 10 October 2002 (2002-10-10) & JP 2002 178630 A (OMRON CORP), 26 June 2002 (2002-06-26)**
- **PATENT ABSTRACTS OF JAPAN vol. 2000, no. 04, 31 August 2000 (2000-08-31) & JP 2000 001565 A (KAWAMURA INST OF CHEM RES), 7 January 2000 (2000-01-07)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 533 321 B1

## Description

### Technical Field

The present invention relates to a porous-material-forming photo-curing resin composition, and more particularly concerns a photo-curing resin composition that forms a porous resin cured product having a very low surface tension and the porous resin cured product obtained by photo-curing such a resin composition.

### Background Art

Conventionally, porous products and porous films, made from thermoplastic resins and thermosetting resins, have been used in various applications so as to utilize their distinctive functions. With respect to the manufacturing method for the porous products and porous films, those using the thermoplastic resin include manufacturing methods such as a foaming-agent decomposition method, a solvent vaporization method, a gas-mixing method, an eluting method and a phase-separation method, and those using the thermosetting resin include manufacturing methods such as a solvent vaporization method and a chemical reaction method. Among porous products and porous films, those porous films that have fine pores having an average pore diameter of not more than 0.01 μm have been used for films, such as ion exchanging membranes, precise filtering films, reverse osmosis membranes, separation films, adsorption films, dialysis membranes, lead battery separators, fuel-battery electrodes and bacteria filters, by utilizing their distinctive functions.

Researches have been made to improve functions of the existing porous films by adding new functions such as water repellency, hydrophobicity, hydrophilicity and lipophilic property to the porous films having fine pores of this type, and manufacturing methods relating to the addition of new functions have been proposed. Among these manufacturing methods for adding new functions, with respect to the manufacturing methods for porous films with fine pores having water repellency and hydrophobicity, methods, which form a polymerization film or a coat film having water repellency and hydrophobicity on a porous film, have been proposed. For example, Japanese Patent Application Laid-Open No. 6-73229 has proposed a method in which a water repellent porous film is manufactured by polymerizing a fluorinated monomer in its adhering state on the two outer-wall faces and inner surfaces of pores of a hollow fiber film or a flat film that has a film thickness of about 20 to 200 μm, a porosity of about 20 to 90% and a pore diameter of about 0.01 to 10 μm. Moreover, Japanese Patent Application Laid-Open No. 2000-288367 has proposed a method in which: a porous film, obtained through a wet and dry spinning method or the like, is immersed in a fluorine-based water-repelling agent aqueous solution (aqueous emulsion) while a degassing process is being carried out, and after having been dried, this is heated to produce a hydrophobic porous film. These conventional techniques relate to a method in which a polymerization film or a coat film containing a fluorine-based water-repellent agent or hydrophobizing agent is formed on the inner and outer surfaces of an existing porous film so that water-repellent and hydrophobic porous films with fine pores are manufactured, and these manufacturing methods are post-processing methods.

### Disclosure of Invention

(Problems to be Solved by the Invention)

The manufacturing method in which a polymerization film or a coat film containing a fluorine-based water-repellent agent or hydrophobizing agent is formed on the inner and outer surfaces of an existing porous film so that water-repellency and hydrophobic property are added thereto, as described in the conventional techniques, have the following problems:

- Since the fluorinated monomer and the fluorine-based water-repellent agent are not allowed to enter very fine pores, it is impossible to evenly apply water-repellency and hydrophobic property to all the surfaces of the fine pores.
- It is impossible to form a homogeneous polymerization film or coat film having an even thickness on the surfaces of fine pores having different dimensions.
- The pore diameter becomes smaller due to post processes for forming a polymerization film or a coat film on the surface of the fine pore.
- Since some fine pores are filled with the fluorinated monomer and the fluorine-based water-repellent agent, the porosity is lowered.
- Since a heating polymerization method or a heat-drying method is used, the porous film requires heat resistance; therefore, the materials for the porous film are limited.
- Adhesion between the fine pore surface and the fluorine-based polymerization film or coat film is poor.

In order to solve the above-mentioned problems with the conventional techniques, the present invention has been devised and its objective is to provide a porous resin cured product which is made from a porous-material-forming photo-curing resin composition and to which water repellency and hydrophobicity are evenly applied, by using a novel method that is completely different from the post processing method used in the conventional techniques.

In accordance with the present invention, the problems with the conventional techniques can be solved by the following arrangements:

- Since a porous resin cured film having a structure in which resin-cured-product fine particles having a very low surface tension are connected to one another three-dimensionally is formed through photo-curing, the function of homogeneous water repellency (hydrophobicity) is applied to the entire inner and outer surfaces of the porous film, independent of the pore dimension.
- Since a curing process using a photo-curing method is carried out, the porous resin cured film is quickly formed easily.
- The resin-cured-product fine particles themselves have a very low surface tension; therefore, different from the conventional post-processing method in which a polymerization film or a coat film is formed on the surface, no problem of poor adherence is raised.
- Since the porous-material-forming photo-curing resin composition is in a liquid state, the porous film is formed into a desired shape.
- The porous resin cured film may be formed either on a substrate or between two substrates.

(Method for Solving the Problems)

The present invention provides a porous-material-forming photo-curing resin composition that is mainly composed of a photo-polymerizable monomer (A) having a surface tension of not more than $25 \times 10^{-5}$ N/cm, an organic compound (B) that is non-compatible with the photo-polymerizable monomer (A), a common solvent (C) that is compatible with the photo-polymerizable monomer (A) and the organic compound (B), and a photo-polymerization initiator (D), and also provides a porous resin cured product made from the resin composition.

In accordance with the present invention, the porous-material-forming photo-curing resin composition makes it possible to form a porous resin cured product having a structure in which resin-cured-product fine particles are connected to one another three-dimensionally through photo-curing quickly with ease, and the porous resin cured product is formed into any desired shapes in addition a membrane form like a film and a sheet. The resin-cured-product fine particles thus formed have a very low surface tension, with the surface tension being desirably adjusted. The average size of the porous resin-cured-product fine particles is adjusted within a range of not more than 1 μm; therefore, the adjustment of the porosity can be carried out in the same manner.

As clearly indicated by the above-mentioned features of the present invention, the porous resin cured product of the present invention, which has no relation to the conventional techniques, is an independent novel invention created by the present inventor.

Here, "surface tension" is an inherent characteristic value of a substance, that is, a physical property value which is correlated with the contact angle. More specifically, when a liquid is applied onto a solid surface to adhere thereto, the following relational expression is held among the surface tension ($\gamma_S$) of the solid, the interface tension ($\gamma_{LS}$) between the solid and the liquid, the surface tension ($\gamma_L$) of the liquid and the contact angle (angle located on the liquid inner side on the contact point between the free surface of the liquid and the solid surface; $\theta$):

$$\gamma_S = \gamma_{LS} + \gamma_L \cos\theta$$

Therefore, with respect to the same solid, the greater the contact angle, the greater the surface tension of the liquid. On the other hand, with respect to the same solid, the smaller the contact angle, the smaller the surface tension of the liquid. As the adhesive strength of a liquid to the solid surface (affinity, wettability) becomes greater, the contact angle becomes smaller, and is set to be less than 90°. In contrast, as the adhesive strength becomes smaller, the contact angle becomes greater to exceed 90°.

Embodiments for Carrying Out of the Invention

The porous-material-forming photo-curing resin composition in accordance with the present invention is a liquid-state photo-curing resin composition that is essentially composed of a photo-polymerizable monomer (A) having a surface tension of not more than $25 \times 10^{-5}$ N/cm, an organic compound (B) that is non-compatible with the photo-polymerizable monomer (A), a common solvent (C) that is compatible with the photo-polymerizable monomer (A) and the organic

compound (B) and a photo-polymerization initiator (D).

The photo-polymerizable monomer (A) having a surface tension of not more than 25 × $10^{-5}$ N/cm to be used in the present invention is one of monomers that have one or more unsaturated bonds at a molecule terminal, and is radically polymerizable by light. In other words, the monomers have a photo-polymerizable unsaturated group, such as an acryloyl group, a methacryloyl group, a vinyl group, an allyl group and a methallyl group, as a terminal group.

It is essential for the photo-polymerizable monomer (A) to have a surface tension of not more than 25 × $10^{-5}$ N/cm, more preferably, not more than 23 × $10^{-5}$ N/cm. When the surface tension of the photo-polymerizable monomer (A) exceeds 25 × $10^{-5}$ N/cm, it is not possible to apply a very low surface tension to the porous resin cured product. Consequently, it is not possible to provide superior water repellency and hydrophobicity.

With respect to the photo-polymerizable monomer (A), a monomer containing a fluorine atom or a silicon atom may be selected. Examples of the monomer containing a fluorine atom include aliphatic and alicyclic monomers containing a fluorine atom, and any of the monomers may be used in the present invention. Examples of the monomer containing silicon include silane-based monomers and siloxane-based monomers. With respect to the terminal unsaturated group of the monomer containing a fluorine atom or a silicon atom, a (metha)acryloyl group (representing both of an acryloyl group and a methacryloyl group; the same is true in the rest of the document) and a vinyl group are preferably used because of their superior photo-curing property.

Preferable aliphatic and alicyclic monomers containing a fluorine atom are those compounds represented by the following general formulas (I) to (IV):

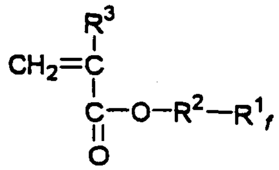

(I)

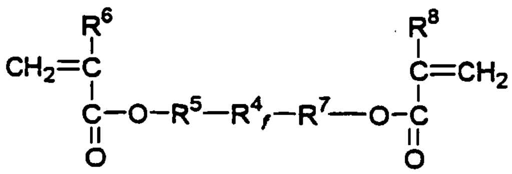

(II)

$CH_2=CH-R^{9}f$ (III)

$CH_2=CH-R^{10}f-CH=CH_2$ (IV)

In formula (I), $R_f^1$ is a poly-fluorinated alkyl group or a poly-fluorinated cyclo-alkyl group having 1 to 12 carbon atoms, and the greater the number of fluorine atom substitutions, the better, and a perfluoroalkyl group is more preferably used. More specifically, preferable examples of the poly-fluorinated alkyl group and poly-fluorinated cyclo-alkyl group include: $F(CF_2)_n$ groups (n = 1 to 12), $(CF_3)_2CF(CF_2)_n$ groups (n = 1 to 10), $H(CF_2)_n$ groups (n = 2 to 10), $CF_3CHFCF_2$ group, $(CF_3)_2CH$ group and hexafluorocyclohexyl group.

$R^2$ represents an alkylene group having 1 to 3 carbon atoms, which may contain a hydroxyl group and a double bond. In other words, examples thereof include a methylene group, an ethylene group, a propylene group, a 2-hydroxy propylene group and a propenylene group.

$R^3$ represents a hydrogen atom or a methyl group.

In general formula (II), $R_f^4$ is a poly-fluorinated alkylene group having 4 to 10 carbon atoms, and the greater the number of fluorine atom substitutions, the better, and a perfluoroalkylene group is more preferably used. More specifically, preferable examples of the poly-fluorinated alkylene group are $(CF_2)_n$ groups (n = 4 to 10).

Each of $R^5$ and $R^7$ represents an alkylene group having 1 to 3 carbon atoms, which may contain a hydroxyl group and a double bond. In other words, examples thereof include a methylene group, an ethylene group, a propylene group, a 2-hydroxy propylene group and a propenylene group.

Each of $R^6$ and $R^8$ represents a hydrogen atom or a methyl group.

In general formula (III), $R_f^9$ is a poly-fluorinated alkyl group having 4 to 12 carbon atoms, and the greater the number of fluorine atom substitutions, the better, and a perfluoroalkyl group is more preferably used. More specifically, preferable examples of the poly-fluorinated alkyl group are $F(CF_2)_n$ groups (n = 4 to 12).

In formula (IV), $R_f^{10}$ is a poly-fluorinated alkylene group having 4 to 12 carbon atoms, and the greater the number of fluorine atom substitutions, the better, and a perfluoroalkylene group is more preferably used. More specifically, preferable examples of the poly-fluorinated alkylene group include: $(CF_2)_n$ groups (n = 4 to 10).

With respect to the silane-based monomers, preferable examples thereof include: silane-based (metha)acrylate compounds, such as (metha)acryloyloxypropyl trimethoxysilane and (metha)acryloyloxypropylmethyl dimethoxysilane, and silane-based vinyl compounds, such as vinyl trimethoxysilane and vinyl triethoxysilane.

With respect to the siloxane-based monomers, preferable examples of the siloxane-based monomers include: siloxane-based (metha)acrylate compounds, such as (metha)acryloyloxypropyl pentamethyl disiloxane, bis((metha)acryloyloxypropyl) tetramethyl disiloxane and bis((metha)acryloyloxypropyl) dodecamethyl hexasiloxane; and siloxane-based vinyl compounds, such as vinyl pentamethyl disiloxane, divinyl tetramethyl disiloxane, and divinyl dodecamethyl hexasiloxane.

In the present invention, together with the above-mentioned photo-polymerizable monomer (A), another photo-polymerizable monomer may be used in combination. In this case, the photo-polymerizable monomer (A) of the present invention and the other photo-polymerizable monomer are not necessarily compatible with each other, but it is preferable to make them compatible with each other. The other photo-polymerizable monomer is used so as to adjust physical properties of the porous resin cured product, such as hardness, strength and heat resistance. When the photo-polymerizable monomer (A) having a surface tension of not more than $25 \times 10^{-5}$ N/cm of the present invention and the other photo-polymerizable monomer are used in combination, the blending amount of the photo-polymerizable monomer (A) is set in a range from 10 to 100% by weight, preferably in a range from 20 to 100% by weight, with respect to the total amount of the photo-polymerizable monomer. The blending amount of less than 10% by weight makes the blending amount of the photo-polymerizable monomer (A) to the organic compound (B) of an essential component of the present invention too small, resulting in degradation in the formability of the porous resin cured product. Moreover, it is not possible to impart a very low surface tension to the porous resin cured product. Consequently, it is not possible to provide superior water repellency and hydrophobicity.

With respect to the other photo-polymerizable monomer, not particularly limited, any monomer may be used as long as it is photo-copolymerizable with the photo-polymerizable monomer (A), and compounds having a (metha) acryloyl group are preferably used because of their superior photo-curing property. Moreover, in an attempt to adjust the physical properties of the porous resin cured product as described above, compounds having two or more (metha) acryloyl groups are more preferably used.

With respect to the compounds having two or more (metha)acryloyl groups, specific examples thereof include: aliphatic, alicyclic and aromatic polyvalent (metha)acrylate compounds, such as 1,3-butane diol (metha)acrylate, 1,4-butane diol di(metha)acrylate, 1,6-hexane diol di(metha)acrylate, 1,9-nonane diol di(metha)acrylate, neopentyl glycol di (metha)acrylate, diethylene glycol di(metha)acrylate, hydroxy pivalic acid neopentylglycol ester di(metha)acrylate, dimethylol tricyclodecane di(metha)acrylate, bisphenol A ethylene oxide 2-mol adduct di(metha)acrylate, bisphenol F ethylene oxide 4-mol adduct di(metha)acrylate, trimethylolpropane tri(metha)acrylate, pentaerythritol tri(metha)acrylate, dipentaerythritol hexa(metha)acrylate, ethane diol diglycidyl ether-(metha)acrylate 2-mol adduct (addition reaction product of acrylic acid or methacrylic acid; the same is true in the rest of the description), 1,2-propane diol diglycidyl ether-(metha)acrylate 2-mol adduct, 1,4-butane diol diglycidyl ether-(metha)acrylate 2-mol adduct, tri-1,2-propane diol diglycidyl ether-(metha)acrylate 2-mol adduct, 1,6-hexane diol diglycidyl ether-(metha)acrylate 2-mol adduct, hydrogenated bisphenol A diglycidyl ether-(metha)acrylate 2-mol adduct, bisphenol A diglycidyl ether-(metha)acrylate 2-mol adduct, and trimethylolpropane triglycidyl ether-(metha)acrylate 3-mol adduct.

In the present invention, a pre-polymer-based polyvalent (metha)acrylate compound may be used as the polyvalent (metha)acrylate compound. In this case, the prepolymer refers to a low-molecular-weight polymer having a polymerization degree of 2 to 20, preferably 2 to 10 (also referred to as oligomer), and examples thereof include prepolymers of polyester, polyurethane and polyether. The prepolymer-based polyvalent (metha)acrylate compound refers to a compound in which at least two or more (metha)acryloyl groups are added to a terminal of such a prepolymer.

With respect to the prepolymer-based polyvalent (metha)acrylate compound, specific examples thereof include: polyester-prepolymer-based, polyurethane-prepolymer-based and polyether-prepolymer-based polyvalent (metha)acrylate compounds, such as (adipic acid/1,6-hexane diol)$_n$ di(metha)acrylate (in which: n represents a polymerization degree of a low-molecular-weight polyester obtained from adipic acid and 1,6-hexane diol, and this polymer forms a prepolymer, and which represents a compound in which hydroxyl groups on the two terminals of this prepolymer are (metha)acrylated with n being set in a range from 2 to 20, and the same is true for the rest of the description), (orthophthalic acid/1,2-propane diol)$_n$ di(metha)acrylate, (2,4-tolylenediisocyanate/1,6-hexane diol)$_n$ di(metha)acrylate, (isophorone-diisocyanate/diethylene glycol)$_n$ di(metha)acrylate, poly(ethylene glycol)$_n$ di(metha)acrylate, poly(propylene glycol)$_n$ di (metha)acrylate, poly(tetramethylene glycol)$_n$ di(metha)acrylate, poly(diglycidyl bisphenol A)$_n$ di(metha)acrylate and

(trimellitic acid/diethylene glycol)$_n$ tri(metha)acrylate. In the present invention, among the above-mentioned polyvalent (metha)acrylate compounds and prepolymer-based polyvalent (metha)acrylate compounds, one kind may be independently selected and used, or two kinds or more may be selected and used in combination.

In the present invention, the blending ratio of the polyvalent (metha)acrylate compound and the prepolymer-based polyvalent (metha)acrylate compound is set in a range from 100 : 0 to 40 : 60 (% by weight). The blending of the prepolymer-based polyvalent (metha)acrylate compound is effective for improving the adhesion to the substrate and the like, in addition to the above-mentioned improvements in physical properties.

Moreover, in the present invention, a monovalent (metha)acrylate compound and a monovalent prepolymer-based (metha)acrylate compound may be further used as another photo-polymerizable monomer as long as the amount is limited to a small level.

With respect to the monovalent (metha)acrylate compound, specific examples thereof include: aliphatic, alicyclic, aromatic and prepolymer-based monovalent (metha)acrylate compounds, such as n-butyl (metha)acrylate, i-butyl (metha)acrylate, 2-ethylhexyl (metha)acrylate, cyclohexyl (metha)acrylate, isobornyl (metha)acrylate, phenyl (metha) acrylate, benzyl (metha) acrylate, phenoxyethyl (metha) acrylate, poly(ethylene glycol)$_n$ (metha)acrylate (n is set in a range from 2 to 20, and the same is true for the rest of the document), methoxypoly(ethylene glycol)$_n$(metha)acrylate and phenoxypoly(ethylene glycol)$_n$ (metha)acrylate.

The organic compound (B) of the present invention is an organic compound, which is non-compatible with the photo-polymerizable monomer (A), and is not compatible with the photo-polymerizable monomer (A) even when mixed at the vicinity of room temperature, and even if mixed and stirred, is phase-separated when left as it is. The organic compound (B) of this type is an organic compound that is easily subjected to molecule-association, and has one kind or more groups and/or bonds selected from the group consisting of a hydroxide group, an amino group, a ketone bond, a sulfide bond, a sulfoxide bond and a cyclic amide bond.

With respect to the organic compound (B), specific examples thereof include: ethylene glycol, 1,3-propane diol, 1,4-butane diol, 1,5-pentane diol, diethylene glycol, triethylene glycol, benzyl alcohol, ethylene diamine, diethylene triamine, benzyl amine, quinoline, methylphenyl ketone, monoethanol amine, diethanol amine, triethanol amine, 2,2'-thiodiethanol, dimethyl sulfoxide and N-methyl pyrrolidone, and any one of the organic compounds is allowed to have a surface tension of not less than $40 \times 10^{-5}$ N/cm. Among these organic compounds (B), those organic compounds having a surface tension of not less than $50 \times 10^{-5}$ N/cm, which have high non-compatibility to the photo-polymerizable monomer (A), are more preferably used. Specific examples of a preferable organic compound (B) include: lower aliphatic amino alcohols, such as monoethanol amine, diethanol amine and triethanol amine, and 2,2'-thiodiethanol. In the present invention, one kind of these organic compounds may be independently used, or two kinds or more of these may be selected and used in combination.

In the present invention, although not an organic compound, water, which has a particularly high surface tension (about $73 \times 10^{-5}$ N/cm, 20°C), may also be used as the (B) component in place of the organic compound (B) of the present invention. Water may be used in combination with the above-mentioned preferable organic compound (B), and the ratio of the combination may be desirably set.

In the present invention, in an attempt to optimize the formability of the porous resin cured product, the photo-polymerizable monomer (A) containing a fluorine atom or a silicon atom and monoethanol amine, diethanol amine, triethanol amine or 2,2-thioethanol, which is the organic compound (B) having a surface tension of not less than $50 \times 10^{-5}$ N/cm, or water, are most preferably used in combination.

In the present invention, the common solvent (C) that is compatible with both of the photo-polymerizable monomer (A) and the organic compound (B) that is non-compatible with the photo-polymerizable monomer (A) or water is an organic solvent which, when the photo-polymerizable monomer (A) and the organic compound (B) or water are mixed at the vicinity of room temperature, is completely compatible with both of the components. Examples of these organic solvents (C) include aromatic or alicyclic hydrocarbon-based solvents, oxygen-containing solvents, such as alcohol, ether, ester, ketone and ether alcohol, and nitrogen-containing solvents, such as amine and amide.

With respect to the organic solvent (C), specific examples include: oxygen-containing solvents including aromatic or alicyclic hydrocarbon-based solvents such as toluene, xylene, ethyl benzene, tetralin and decalin; alcohol-based solvents, such as ethanol, n- and i-propanol, n- and t-butanol, n-pentanol, n-hexanol, n-octanol, 2-ethyl hexanol, n-decanol and cyclohexanol; ether-based solvents, such as tetrahydrofran, ethylphenyl ether, anisole, dioxane and diethylene glycol dimethylether; ester-based solvents, such as cyclohexyl acetate and methyl benzoate; ketone-based solvents, such as acetone, methylethyl ketone and cyclohexane; ether alcohol-based solvents, such as 1,2-ethane diol monomethyl ether, 1,2-ethane diol monoethyl ether, diethylene glycol monomethyl ether and diethylene glycol monoethyl ether; and nitrogen-containing solvents including piperidine, cyclohexyl amine, pyridine, dimethyl acetamide and dimethyl formamide.

Among the above-mentioned organic solvents (C), those organic solvent having a surface tension in a range from $25 \times 10^{-5}$ N/cm to $35 \times 10^{-5}$ N/cm, more specifically, in a range from $30 \times 10^{-5}$ N/cm to $35 \times 10^{-5}$ N/cm, are particularly effective, and used as the common solvent in the present invention. Examples of these organic solvents

include: toluene, ethyl benzene, xylene, decalin, tetralin, n-octanol, 2-ethyl hexanol, cyclohexanol, ethylphenyl ether, cyclohexyl acetate, cyclohexanone, 1,2-ethan diol, monomethyl ether, 1,2-etane diol monoethyl ether, diethylene glycol monomethyl ether, piperidine, cyclohexyl amine, dimethyl formamide and dimethyl acetamide.

With respect to the above-mentioned various kinds of organic solvents in the present invention, each of them may be used alone, or two or more kinds of the solvents of the same type may be used in combination, or two or more kinds of the solvents of different types may be used in combination. In the organic solvent (C) to be used alone or to be used in combination in the present invention, the boiling point under normal pressure is preferably set in a range from 50 to 250°C, preferably in a range from 70 to 200°C. The boiling point of less than 50°C tends to cause evaporation around room temperature, making it difficult to handle and also to control the blending amount in the photo-curing liquid-state resin composition of the present invention. In contrast, the boiling point exceeding 250°C is not preferable, since it causes a problem in forming the porous resin cured product of the present invention.

In the present invention, in order to optimize the formability of the porous resin cured product, it is most preferable to use a photo-polymerizable monomer (A) containing a fluorine atom or a silicon atom, an organic compound (B), such as monoethanol amine, diethanol amine and triethanol amine, having a surface tension of not more than $50 \times 10^{-5}$ N/cm or water, and a common solvent (C) that is an organic solvent having a surface tension in a range from 30 to $35 \times 10^{-5}$ N/cm, in combination.

With respect to the blending ratio of the photo-polymerizable monomer (A) (when used in combination with another photo-polymerizable monomer, referred to as photo-polymerizable monomer (A), and the entire polymerizable monomer with another polymerizable monomer is referred to simply as " A' "), the organic compound (B) that is non-compatible with the photo-polymerizable monomer (A) (when used in combination with water, a mixture with water is referred to as organic compound (B), and when water is used in place of the organic compound (B), water is referred to simply as " B' "), and the common solvent (C) that is commonly compatible with (A) and (B), although the ratio varies depending on the molecular weight, boiling point and the like of respective components to be used, it is normally set in a range of (A or A') : [(B or B') + (C)] = 80 : 20 to 10 : 90 (weight%). When the blending ratio of (A or A') exceeds 80% by weight, the ratio becomes too great with respect to the component amount [(B or B') + (C)], and the blending ratio of less than 10% by weight makes the component amount [(B or B') + (C)] in the liquid-state resin composition become too great, making it difficult to form a desired porous resin cured product. Here, the blending ratio between (B or B') and (C) is normally set in a range from (B or B') : (C) = 80 : 20 to 20 : 80 (% by weight); thus, it is possible to mix them at an optimal ratio in accordance with the blending amount of (A or A'). When the blending amount of (B or B') exceeds 80% by weight, or when it is less than 20% by weight, it becomes difficult to form a porous resin cured product having superior properties.

The photo-polymerization initiator (D) to be used in the present invention is an essential component that is used for curing the photo-curing liquid-state resin composition of the present invention through irradiation with light to form the porous resin cured product of the present invention. The initiator is of course not required when the curing process is carried out through irradiation with electron beam; however, this method is very expensive as a curing method, and fails to provide a commonly-used method.

With respect to the photo-polymerization initiator (D), not limited to compounds as disclosed by the present invention, any one of generally-used photo-polymerization initiators is used, and examples thereof include: carbonyl-compound-based photo-polymerization initiators, such as acetophenones, benzophenones, diacetyls, benzyls, benzoins, benzoin ethers, benzyl dimethyl ketals, benzoyl benzoates, hydroxy phenyl ketones and aminophenyl ketones; organic sulfur compound-based photo-polymerization initiators such as thiraum sulfides and thioxanthones, and organic phosphor compound-based photo-polymerization initiators such as acylphosphine oxides and acylphosphinates. In the present invention, among these various kinds of photo-polymerization initiators, one kind may be selected and used alone, or two or more kinds may be selected and used in combination. In the present invention, only a slight amount of the photo-polymerization initiator (D) may be added, and the amount of addition is generally set in a range from 0.1 to 3.0% by weight with respect to the photo-polymerizable monomer (A or A'), that is, the entire amount of the photo-polymerizable monomer; however, even the amount of addition from 0.5 to 1.5% by weight can provide a good curing property.

With respect to the preparation method for the porous-material-forming photo-curing resin composition, generally, after the photo-polymerization initiator (D) has been dissolved in the photo-polymerizable monomer (A or A'), other essential components are mixed and dissolved therein to form a transparent solution.

With respect to the base material to be used for forming the porous resin cured product, base materials such as glass, ceramics, plastics and paper may be used.

With respect to the forming method for the porous resin cured product of the present invention, after the photo-curing liquid-state resin composition of the present invention has been directly applied to the base material to form a coat film with a predetermined thickness, the resulting member is photo-cured. With respect to the method for applying the photo-curing liquid-state resin composition of the present invention to the base material with a fixed thickness, a method such as a dripping method, a bar-coating method, a knife coating method and a spin coating method may be

used. When a flexible base material such as a film and paper is used, various roll coating method, such as a direct-roll coating method, a reverse-roll coating method and a gravure-roll coating method, may be adopted. Although not particularly limited, the thickness of the coat film is generally set in a range from 5 to 100 μm, or the thickness may be made thicker or thinner than this range.

With respect to the light source for the photo-curing of the photo-curing liquid-state resin composition of the present invention, a light source that generates ultraviolet rays is most suitable. In general, in order to carry out the photo-curing process through irradiation with ultraviolet rays, a very high pressure mercury lamp, a high pressure mercury lamp, a low pressure mercury lamp, a metal halide lamp, a carbon arc lamp and a xenon lamp for use in ultraviolet-ray curing resin are used to apply ultraviolet rays. More preferably, a high pressure mercury lamp or a metal halide lamp, which have comparatively many ultraviolet rays centered on the wavelength 365 nm, is preferably used. The dose of irradiation of ultraviolet rays is generally set to not less than 500 $mJ/cm^2$, preferably in a range from 1000 to 2000 $mJ/cm^2$.

After having been applied to the base material, the photo-curing liquid-state resin composition of the present invention is irradiated with ultraviolet rays from the ultraviolet-ray light source so that the photo-polymerizable monomer (A or A'), contained in the composition, is photo-cured; thus, a porous resin cured product having a structure in which resin-cured-product fine particles are connected to one another three-dimensionally is formed. This ultraviolet-ray irradiation may be carried out on the coated film, as it is; however, in order to stabilize the curing property of the coat film, to provide the surface smoothness of the porous resin cured product and also to support the resulting porous resin cured product, after the surface of the coat film have been coated with a glass plate or a transparent plastic film, ultraviolet rays are preferably applied thereto.

The porous resin cured product, thus formed through the photo-curing process, contains the organic compound (B) or water on demand, and the common solvent (C), and in order to form a resin cured product having fine pores, these components need to be removed. With respect to the method for removing these components, a heating vaporization method and a hot-air vaporization method under normal pressure or a reduced pressure and a solvent-elution method, which uses a low-boiling-point solvent such as methanol, ethanol and acetone, are proposed, and an optimal method can be selected depending on the boiling point and solubility of the contained organic compound (B) or water and the common solvent (C). The heating vaporization method and the hot-air vaporization method need to be carried out at a temperature that is determined by taking the heat resistance of the base material to be used into consideration.

The porous resin cured product having a structure in which fine particles of the resin cured product of the present invention are connected to one another three-dimensionally is allowed to have a very low surface tension evenly not only on the surface, but also on the entire inner surfaces of the pores, independent of the sizes of the pores. For example, the achieved surface tension is indicated by a range of contact angle to water from 90 to 160°, particularly from 120 to 150°. Moreover, since the fine particles of the resin cured product are made from a cured product containing a fluorine atom or a silicon atom, the fine particles also have functions such as a low refractive index, good light resistance or superior electrical characteristics. Therefore, as a whole, the porous resin cured product has a low refractive index, good light resistance or superior electrical characteristics evenly.

The average dimension of the pores contained in the porous resin cured product of the present invention, which can be adjusted within an area of not more than 1 μm, is generally set in a range from 0.01 to 0.5 μm. Moreover, the porosity of the pores, which is also adjustable, is also generally set in a range from 10 to 80%.

The porous resin cured product of the present invention, constituted by fine pores, not only has a very low surface tension on the outer surface as well as on the inner surface, but also has features such as a low refractive index, and superior light resistance and electrical characteristics. These functions can be adjusted depending on the content of a fluorine atom or a silicon atom contained in the porous resin cured product of the present invention.

The porous resin cured product of the present invention is effectively used for applications that require features of the porous resin cured product and functions such as a very low surface tension, a low refractive index, and superior light resistance and electrical characteristics. Such applications include an application in which the porous resin cured product is used as a supporting material with an inorganic or organic material being injected into the pores and an application in which the porous resin cured product is used without injecting anything into the pores.

Industrial Applicability

With respect to the application in which the porous resin cured product is used as a supporting material with an inorganic or organic material being injected into the pores, examples thereof include display elements, recording materials, printing ink receiving base members and optical functional members. In the application of this type, the porous resin cured product (porous film) of the present invention makes it possible to improve not only the functions as the supporting material, but also the functions of the functional material injected therein.

For example, in the case when the porous resin cured product constituted by fine pores of the present invention is applied to a supporting material for liquid crystal display elements, a liquid crystal recording material and the like by utilizing its features of having a very low surface tension and a low refractive index, it becomes possible to improve the

movability of the liquid crystal composition serving as the functional material inside the pores, that is, the low-voltage driving property thereof, and also to adjust the refractive index when used as the supporting material.

(Examples)

The following description will discuss the present invention in detail by means of examples; however, the present invention is not intended to be limited by the following examples.

Characteristic values of the examples and comparative examples were obtained by using the following measuring methods.

Measurements of average pore diameter and porosity

A porous resin cured product film having fine pores, formed on a glass substrate, was separated, and measured by using an Auto Pore IV (Type 9520: made by Simadzu-Micromeritics Ltd.) through a mercury press-fit method. In the average pore-diameter measurements, supposing that the fine pore has a cylindrical shape, the pore radius is measured by calculations based upon the inversely proportional relationship of the mercury to the applied pressure. With respect to the measurements of the porosity, the pore diameter (r: A) distribution from about 0.005 $\mu$m to about 70 $\mu$m and the volume porosity (dVp/d log r: ml/g) were measured, and the sum of the volume porosity is specific-gravity converted to obtain the porosity (%: $cm^3/cm^3 \times 100\%$).

Measurements of contact angle

The surface tension is determined by measuring the contact angle ($\theta$) that is correlated with the surface tension and based upon the high and low levels thereof. In other words, pure water is applied to the surface of a porous resin cured product film having fine pores, formed on a glass substrate, to adhere thereto as a droplet, and the contact angle of the droplet after a lapse of 0.5 seconds was measured by using an automatic contact-angle meter (Type CA-V: made by Kyowa Interface Science Co., Ltd.) through a $\theta/2$ method.

Example 1

Perfluorooctylethyl acrylate serving as a photo-polymerizable monomer (A) (surface tension = $21.3 \times 10^{-5}$ N/cm) (20 parts by weight), trimethylol propane triacrylate (surface tension = $37.8 \times 10^{-5}$ N/cm) (20 parts by weight) and polytetramethylene glycol (polymerization degree = about 3) diacrylate (surface tension = $34.8 \times 10^{-5}$ N/cm) (Light Acrylate PTMGA-250: made by Kyoeisha Chemical Co., Ltd.) (20 parts by weight) serving as other photo-polymerizable monomers were mixed, and to this was added as a photo-polymerization initiator (D) 0.5 parts by weight of 2-hydroxy-2-methyl-1-phenyl-propane-1-on (trade name: Darocure 1173, made by Ciba Specialty Chemicals) and sufficiently stirred and dissolved therein.

Next, triethanol amine (surface tension = $53.1 \times 10^{-5}$ N/cm) (80 parts by weight) serving as an organic compound (B) that is not compatible with the photo-polymerizable monomer (A) and isopropyl alcohol (surface tension = $25.2 \times 10^{-5}$ N/cm) (160 parts by weight) serving as a common solvent (C) that is compatible with both of the photo-polymerizable monomer (A) and the organic compound (B) were mixed with this and stirred until the resulting mixture became transparent; thus, a homogeneous porous-material-forming photo-curing resin composition (I) of the present invention was prepared.

This liquid-state resin composition (I) was evenly applied to a glass substrate by using a schemer gauge and a bar-coater coating device, and immediately after having been coated with a glass plate, this was subjected to ultraviolet-ray irradiation by a high-pressure mercury lamp up to 1200 mJ/$cm^2$ so that a porous resin cured product film (I-F) (thickness = about 10 $\mu$m) that had become opaque was formed.

Successively, the coating glass plate was removed, and the resulting porous resin cured product film was washed with acetone sufficiently to remove triethanol amine and isopropyl alcohol, and this was then air-dried to obtain a porous resin cured film having fine pores of the present invention.

The average fine pore diameter, porosity and contact angle of the porous resin cured film having fine pores were measured, and the following results were obtained: average pore diameter = 0.21 $\mu$m, porosity = 77% and contact angle = 137.5°.

Table 1 shows an electron microscopic photograph of the surface of the porous resin cured product film (I-F) of the present embodiment.

Comparative Example 1

Trimethylolpropane triacrylate (40 parts by weight) and polytetramethylene glycol (polymerization degree = about 3) diacrylate (the same as described above) (20 parts by weight), which serve as photo-polymerizable monomers, were mixed, and to this was added as a photo-polymerization initiator 0.5 parts by weight of 2-hydroxy-2-methyl-1-phenyl-propane-1-on (the same as described above) and sufficiently stirred and dissolved therein.
Next, triethanol amine (80 parts by weight) and isopropyl alcohol (160 parts by weight) were mixed with this and stirred until the resulting mixture became transparent; thus, a homogeneous porous-material-forming photo-curing resin composition (1) was prepared.
This liquid-state resin composition (1) was used, and the same sequence of processes as example 1 was carried out under the same conditions so that a porous resin cured product film (thickness = about 10 $\mu$m) that had become opaque was formed on a glass substrate.
Successively, the coating glass plate was removed, and the resulting porous resin cured product film was washed with acetone sufficiently to remove triethanol amine and isopropyl alcohol, and this was then air-dried to obtain a porous resin cured product film having fine pores of the present invention.
The average fine pore diameter, porosity and contact angle of the porous resin cured product film having fine pores were measured, and the following results were obtained: average pore diameter = 0.18 $\mu$m, porosity = 76% and contact angle = 14.5°.

Example 2

The same sequence of processes as example 1 was carried out by using the same components and the same blending amounts, except that the amount of perfluorooctylethyl acrylate serving as the photo-polymerizable monomer (A) was changed to 10 parts by weight, with the amount of trimethylolpropane triacrylate being changed to 30 parts by weight, so that a porous-material-forming photo-curing resin composition (II) was prepared.
This liquid-state resin composition (II) was used, and the same sequence of processes as example 1 was carried out under the same conditions so that a porous resin cured product film (thickness = about 20 $\mu$m) that had become opaque was formed on a glass substrate.
Successively, the coating glass plate was removed, and the resulting porous resin cured product film was washed with acetone sufficiently to remove triethanol amine and isopropyl alcohol, and this was then air-dried to obtain a porous resin cured product film having fine pores of the present invention.
The average fine pore diameter, porosity and contact angle of the porous resin cured product film having fine pores were measured, and the following results were obtained: average pore diameter = 0.23 $\mu$m, porosity = 76% and contact angle = 136.1°.

Example 3

The same sequence of processes as example 1 was carried out by using the same components and the same blending amounts, except that the amount of perfluorooctylethyl acrylate serving as the photo-polymerizable monomer (A) was changed to 5 parts by weight, with the amount of trimethylolpropane triacrylate being changed to 35 parts by weight, so that a porous-material-forming photo-curing resin composition (III) was prepared.
This liquid-state resin composition (III) was used, and the same sequence of processes as example 1 was carried out under the same conditions so that a porous resin cured product film (thickness = about 20 $\mu$m) that had become opaque was formed on a glass substrate.
Successively, the coating glass plate was removed, and the resulting porous resin cured product film was washed with acetone sufficiently to remove triethanol amine and isopropyl alcohol, and this was then air-dried to obtain a porous resin cured product film having fine pores of the present invention.
The average fine pore diameter, porosity and contact angle of the porous resin cured product film having fine pores were measured, and the following results were obtained: average pore diameter = 0.19 $\mu$m, porosity = 77% and contact angle = 130.1°.

Example 4

To 2,2,3,3,4,4,5,5-octafluorohexane diol dimethacrylate serving as a polymerizable monomer (A) (surface tension = $18.6 \times 10^{-5}$ N/cm) (30 parts by weight) were added neopentylglycol dimethacrylate (surface tension = $34.8 \times 10^{-5}$ N/cm) (20 parts by weight) and 1,4-butane diol dimethacrylate (surface tension = $34.8 \times 10^{-5}$ N/cm) (10 parts by weight) serving as other photo-polymerizable monomers and mixed, and to this was added as a photo-polymerization initiator (D) 0.5 parts by weight of 1-hydroxycyclohexylphenyl ketone (trade name: Irgacure 184, made by Ciba Specialty

Chemicals) and sufficiently stirred and dissolved therein.

Next, monoethanol amine (surface tension = 51.6 × $10^{-5}$ N/cm) (60 parts by weight) serving as an organic compound (B) and cyclohexane (surface tension = 33.7 × $10^{-5}$ N/cm) (90 parts by weight) serving as a common solvent (C) were mixed with this and stirred until the resulting mixture became transparent; thus, a homogeneous porous-material-forming photo-curing resin composition (IV) of the present invention was prepared.

This liquid-state resin composition (IV) was used, and the same sequence of processes as example 1 was carried out under the same conditions so that a porous resin cured product film (thickness = about 30 μm) that had become opaque was formed on a glass substrate.

Successively, the coating glass plate was removed, and the resulting porous resin cured product film was allowed to stand still under a reduced pressure with application of heat to remove monoethanol amine and cyclohexane; thus, a porous resin cured product film having fine pores of the present invention was obtained.

The average fine pore diameter, porosity and contact angle of the porous resin cured product film having fine pores were measured, and the following results were obtained: average pore diameter = 0.15 μm, porosity = 65% and contact angle = 136.0°.

Comparative Example 2

The same sequence of processes as example 4 was carried out under the same conditions, except that, without using 2,2,3,3,4,4,5,5-octafluorohexane diol dimethacrylate, 40 parts by weight of neopentylglycol dimethacrylate and 20 parts by weight of 1,4-butane diol dimethacrylate were used, so that a porous resin cured product film (thickness = about 30 μm) that had become opaque was formed on a glass substrate.

Successively, monoethanol amine and cyclohexane were removed by using the same sequence of processes as example 4 under the same conditions to obtain a porous resin cured product film having fine pores.

The average fine pore diameter, porosity and contact angle of the porous resin cured product film having fine pores were measured, and the following results were obtained: average pore diameter = 0.17 μm, porosity = 66% and contact angle = 28.3°.

Example 5

To γ-methacryloyloxy propylpentamethyl disiloxane serving as a photo-polymerizable monomer (A) (surface tension = 15.6 × $10^{-5}$ N/cm) (30 parts by weight), were added and mixed trimethylol propane triacrylate (20 parts by weight) and polyethylene glycol (polymerization degree = about 4) dimethacrylate (trade name: Light Ester 4EG: made by Kyoeisha Chemical Co., Ltd.) (10 parts by weight) serving as other photo-polymerizable monomers, and to this was added as a photo-polymerization initiator (D) 0.5 parts by weight of Darocure 1173 (the same as described above) and sufficiently stirred and dissolved therein.

Next, diethanol amine (surface tension = 52.3 × $10^{-5}$ N/cm) (30 parts by weight) serving as an organic compound (B) and diethylene glycol monomethyl ether (surface tension = 31.2 × $10^{-5}$ N/cm) (60 parts by weight) serving as a common solvent (C) were mixed with this and stirred until the resulting mixture became transparent; thus, a porous-material-forming photo-curing resin composition (V) of the present invention was prepared.

This liquid-state resin composition (V) was used, and the same sequence of processes as example 1 was carried out under the same conditions so that a porous resin cured product film (thickness = about 20 μm) that had become opaque was formed on a glass substrate.

Successively, the coating glass plate was removed, and the resulting porous resin cured product film was washed with ethanol sufficiently to remove diethanol amine and diethylene glycol monomethyl ether, and this was then air-dried to obtain a porous resin cured product film having fine pores of the present invention.

The average fine pore diameter, porosity and contact angle of the porous resin cured product film having fine pores were measured, and the following results were obtained: average pore diameter = 0.06 μm, porosity = 57% and contact angle = 127.5°.

Comparative Example 3

The same sequence of processes as example 5 was carried out under the same conditions, except that, without using γ-methacryloyloxy propylpentamethyl disiloxane, 40 parts by weight of trimethylolpropane triacrylate and 20 parts by weight of polyethylene glycol (polymerization degree = about 4) dimethacrylate (the same as described above) were used, so that a porous resin cured product film (thickness = about 20 μm) that had become opaque was formed on a glass substrate.

Successively, the coating glass plate was removed, and diethanol amine and diethyleneglycol monomethyl ether were removed by using the same sequence of processes as example 3 under the same conditions to obtain a

porous resin cured product film having fine pores.

The average fine pore diameter, porosity and contact angle of the porous resin cured product film having fine pores were measured, and the following results were obtained: average pore diameter = 0.07 μm, porosity = 55% and contact angle = 35.7°.

Example 6

The porous-material-forming photo-curing resin composition (I), prepared in example 1 was evenly applied onto a center portion 30 × 30 mm of a soda-lime glass plate with an ITO having a thickness of 1.1 mm by using a schemer gauge and a bar-coater coating device, and after having been coated with a soda-lime glass plate, this was subjected to ultraviolet-ray irradiation by a high-pressure mercury lamp up to 1200 mJ/$cm^2$ so that a porous resin cured product film (thickness = about 10 μm) that had become opaque was formed.

Successively, the coating soda-lime glass plate was removed gently, and after the schemer gauge has been removed, this was immersed in ethanol to elute and remove triethanol amine and isopropyl alcohol, and ethanol was then evaporated and removed under a reduced pressure.

Next, by using an epoxy resin sealant having about 3% of silica beads of 10 μm mixed therein, the porous resin cured product film was sealed in a manner so as to sandwich the film by soda lime glass plates with ITO, and a TN liquid crystal compound ($\Delta n$ = 0.243, 25°C) was then injected therein through a vacuum injection method so that a prototype self-supporting liquid crystal film was formed.

With respect to the prototype self-supporting liquid crystal film, the change in parallel-light-ray transmittance in response to a voltage was measured through a testing method in accordance with JISK 7361-1 by using a turbidity meter (Type: NDH2000, made by Nihon Denshoku Industry Co., Ltd.); thus, the results are shown in Fig. 2. In a range from 0 to 100 V, the rate of change in the parallel-light-ray transmittance was 59.7%. Moreover, the ratio of parallel-light-ray transmittances (contrast) between 0 V and 100 V was 3.9.

Comparative Example 4

The photo-curing resin composition (1), prepared in comparative example 1, was used, and the same sequence of processes as example 6 was carried out under the same conditions to prepare a prototype self-supporting liquid crystal film.

With respect to the prototype self-supporting liquid crystal film, the change in parallel-light-ray transmittance in response to a voltage was measured in the same manner as example 6, and the results are shown in Fig. 3. In a range from 0 to 100 V, the rate of change in the parallel-light-ray transmittance was 26.4%. Moreover, the ratio of parallel-light-ray transmittances (contrast) between 0 V and 100 V was 1.5.

When the results of example 6 are compared with those of comparative example 4, it is clearly found that the self-supporting liquid crystal film that uses the porous resin cured product film having a very low surface tension of the present invention as its supporting material has a greater change in the rate of light transmittance in response to a voltage and an increased contrast.

(Effects superior to those of the prior art)

A porous resin cured product, made from the porous-material-forming photo-curing resin composition of the present invention, has a structure in which resin cured product fine particles, which have been formed by a photo-curing method that is completely different from the manufacturing method of conventional techniques, are continuously connected to one another three-dimensionally, and not only the surface thereof, but also the inner surfaces of the pores have a homogeneous structure with a very low surface tension. Moreover, the porous resin cured product also has other desirable functions so that it can be used for various applications.

BRIEF DESCRIPTION OF THE DRAWINGS

Fig. 1 is an electron microscopic photograph (× 20,000) of a porous resin cured product film (example 1).

Fig. 2 is a graph that shows a relationship between a voltage and a parallel-light-ray transmittance in a prototype self-supporting liquid crystal film (example 6).

Fig. 3 is a graph that shows a relationship between a voltage and a parallel-light-ray transmittance in a prototype self-supporting liquid crystal film (comparative example 4) .

## Claims

**1.** A porous-material-forming photo-curing resin composition comprising:

a photo-polymerizable monomer (A) containing one or more fluorine atom(s) or one or more silicon atom(s) and one or more (metha)acryloyl group(s) or one or more vinyl group(s) as a photo-polymerizable group and having a surface tension of not more than $25 \times 10^{-5}$ N/cm,
an organic compound (B) that is non-compatible with the photo-polymerizable monomer (A), wherein the organic compound (B) contains one or more kinds of group(s) and/or bond(s) selected from the group consisting of hydroxide group, amino group, ketone bond, sulfide bond, sulfoxide bond and cyclic amide bond and has a surface tension of not less than $40 \times 10^{-5}$ N/cm,
a common solvent (C) that is compatible with the photo-polymerizable monomer (A) and the organic compound (B), wherein the common solvent (C) is an aromatic or alicyclic hydrocarbon solvent, an oxygen-containing solvent or a nitrogen-containing solvent and has a surface tension in a range from $25 \times 10^{-5}$ to $35 \times 10^{-5}$ N/cm; and
a photo-polymerization initiator (D).

**2.** The porous-material-forming photo-curing resin composition according to claim 1, wherein the photo-polymerizable monomer (A) and other photo-polymerizable monomers are used in combination and the blending amount of the other photo-polymerizablemonomers is not more than 90% by weight of the entire amount of the photo-polymerizable monomers.

**3.** The porous-material-forming photo-curing resin composition according to claim 1 or claim 2, wherein water is used instead of the organic compound (B) or together with the organic compound (B).

**4.** The porous-material-forming photo-curing resin composition according to any one of claims 1 to 3, wherein the oxygen-containing solvent is selected from alcohol, ether, ester, ketone or ether alcohol and the nitrogen-containing solvent is selected from piperidine, cyclohexyl amine, pyridine, dimethyl acetamide or dimethyl formamide.

**5.** The porous-material-forming photo-curing resin composition according to claim 1, wherein the organic compound (B) is selected from lower aliphatic amino alcohol or 2,2'-thiodiethanol.

**6.** A porous resin cured product which is obtained by photo-curing the porous-material-forming photo-curing resin composition according to any one of the claims 1 to 5.

**7.** The porous resin cured product according to claim 6, which is obtained by removing the organic compound (B) or water and the common solvent (C) contained therein.

**8.** The porous resin cured product according to claim 6 or 7, which has a film shape or a sheet shape.

**9.** The porous resin cured product according to any one of the claims 6 to 8, which has a substrate on at least one surface.

**10.** A liquid crystal display element comprising the porous resin cured product according to any one of the claims 6 to 9 as a supporting material.

**11.** A liquid crystal recording material comprising the porous resin cured product according to any one of the claims 6 to 9 as a supporting material.

## Patentansprüche

**1.** Ein poröses Material bildende photohärtende Harzzusammensetzung, welche aufweist:

Ein photopolymerisieibares Monomer (A), weiches ein oder mehr als ein Fluoridatom und eine oder mehr als eine (Metha)acryloyl-Gruppe oder eine oder mehr als eine Vinyl-Gruppe als photopolymerisierbare Gruppe enthält und eine Oberflächenspannung von nicht mehr als $25 \times 10^{-5}$ N/cm hat,
eine organische Verbindung (B), welche mit dem photopolymerisierbaren Monomer (A) nicht-kompatibel ist, wobei die organische Verbindung (B) eine oder mehr als eine Art von Gruppen und/oder Bindungen, ausgewählt aus der Gruppe, bestehend aus Hydroxid-Gruppe, Amino-Gruppe, Keton-Bindung, Sulfid-Bindung, Sulfoxid-Bindung und Ringamidbindung, ist und eine Oberflächenspannung von nicht weniger als 40 x $10^{-5}$ N/cm hat,
ein gängiges Lösungsmittel (C), das mit dem photopolymerisierbaren Monomer (A) unter der organischen Verbindung (B) kompatibel ist, wobei das gängige Lösungsmittel (C) ein aromatisches oder alizyklisches Kohlenwasserstofflösungsmittel, ein sauerstoffhaltiges Lösungsmittel oder ein stickstoffhaltiges Lösungsmittel ist und eine Oberflächenspannung im Bereich von 25 x $10^{-5}$ bis 35 x $10^{-5}$ N/cm hat; und
einen Photopolymerisationsinitiator (D).

**2.** Ein poröses Material bildende photohärtende Harzzusammensetzung nach Anspruch 1, wobei das photopolymerisierbare Monomer (A) und andere photopolymerisierbare Monomere in Kombination verwendet werden und die Beimischungsmenge der anderen photopolymerisierbaren Monomere nicht mehr als 90 Gew.-% der Gesamtmenge der photopolymerisierbaren Monomere ist.

**3.** Ein poröses Material bildende photohärtende Harzzusammensetzung nach Anspruch 1 oder Anspruch 2, wobei Wasser anstelle der organischen Verbindung (B) oder zusammen mit der organischen Verbindung (B) verwendet wird.

**4.** Ein poröses Material bildende photohärtende Harzzusammensetzung nach irgendeinem der Ansprüche 1 bis 3, wobei das sauerstoffhaltige Lösungsmittel aus Alkohol, Ether, Ester, Keton oder Etheralkohol und das stickstoffhaltige Lösungsmittel aus Piperidin, Cyclohexylamin, Pyridin, Dimethylacetamid oder Dimethylfomamid ausgewählt ist.

**5.** Ein poröses Material bildende photohärtende Harzzusammensetzung nach Anspruch 1, wobei die organische Verbindung (B) aus niedrigem aliphatischem Aminoalkohol oder 2,2'-Thiodiethanol ausgewählt ist.

**6.** Gehärtetes Produkt aus porösem Harz, welches durch Photohärtung der ein poröses Material bildenden photohärtenden Harzzusammensetzung nach irgendeinem der Ansprüche 1 bis 5 gewonnen ist.

**7.** Gehärtetes Produkt aus porösem Harz nach Anspruch 6, welches durch Entfernen der organischen Verbindung (B) oder von Wasser und des darin enthaltenen gängigen Lösungsmittels (C) gewonnen ist.

**8.** Gehärtetes Produkt aus porösem Harz nach Anspruch 6 oder 7, welches eine Folienform oder Blattform hat.

**9.** Gehärtetes Produkt aus porösem Harz nach irgendeinem der Ansprüche 6 bis 8, welches ein Substrat auf wenigstens einer Oberfläche aufweist.

**10.** Flüssigkristallanzeigeelement, welches das gehärtete Produkt aus porösem Harz nach irgendeinem der Ansprüche 6 bis 9 als Trägermaterial aufweist.

**11.** Flüssigkristallaufzeichnungsmaterial, welches das gehärtete Produkt aus porösem Harz nach irgendeinem der Ansprüche 6 bis 9 als Trägermaterial aufweist.

## Revendications

**1.** Composition de résine photodurcissable formant un matériau poreux comprenant :

■ un monomère photopolymérisable (A) contenant un ou plusieurs atomes de fluor ou un ou plusieurs atomes de silicium et un ou plusieurs groupes (méth)acryloyle ou un ou plusieurs groupes vinyle en tant que groupe photopolymérisable et ayant une tension superficielle n'excédant pas 25 x $10^{-5}$ N/cm,
■ un composé organique (B) qui n'est pas compatible avec le monomère photopolymérisable (A), dans lequel le composé organique (B) contient un ou plusieurs types de groupes et/ou de liaisons choisi(e)s dans le groupe constitué par un groupe hydroxyde, un groupe amino, une liaison cétone, une liaison sulfure, une liaison sulfoxyde et une liaison amide cyclique et a une tension superficielle d'au moins 40 x $10^{-5}$ N/cm,
■ un solvant courant (C) qui est compatible avec le monomère photopolymérisable (A) et le composé organique (B), dans lequel le solvant courant (C) est un solvant contenant un hydrocarbure aromatique ou alicyclique, un solvant contenant de l'oxygène ou un solvant contenant de l'azote et a une tension superficielle dans une plage allant de 25 x $10^{-5}$ à 35 x $10^{-5}$ N/cm ; et
■ un initiateur de photopolymérisation (D).

2. Composition de résine photodurcissable formant un matériau poreux selon la revendication 1, dans laquelle le monomère photopolymérisable (A) et d'autres monomères photopolymérisables sont utilisés de façon combinée et la quantité de mélange des autres monomères photopolymérisables n'excède pas 90 % en poids de la quantité totale des monomères photopolymérisables.

3. Composition de résine photodurcissable formant un matériau poreux selon la revendication 1 ou la revendication 2, dans laquelle l'eau est utilisée à la place du composé organique (B) ou conjointement avec le composé organique (B).

4. Composition de résine photodurcissable formant un matériau poreux selon l'une quelconque des revendications 1 à 3, dans laquelle le solvant contenant de l'oxygène est choisi parmi un alcool, un éther, un ester, une cétone ou un éther alcool et le solvant contenant de l'azote est choisi parmi la pipéridine, la cyclohexyl-amine, la pyridine, le diméthylacétamide ou le diméthylformamide.

5. Composition de résine photodurcissable formant un matériau poreux selon la revendication 1, dans laquelle le composé organique (B) est choisi parmi un aminoalcool aliphatique inférieur ou le 2,2'-thiodiéthanol.

6. Produit poreux en résine durci qui est obtenu en photodurcissant la composition de résine photodurcissable formant un matériau poreux selon l'une quelconque des revendications 1 à 5.

7. Produit poreux en résine durci selon la revendication 6, qui est obtenu en éliminant le composé organique (B) ou l'eau et le solvant courant (C) contenu dans celui-ci.

8. Produit poreux en résine durci selon la revendication 6 ou 7, qui a une forme de film ou une forme de feuille.

9. Produit poreux en résine durci selon l'une quelconque des revendications 6 à 8, qui a un substrat sur au moins une surface.

10. Élément d'affichage à cristaux liquides comprenant le produit poreux en résine durci selon l'une quelconque des revendications 6 à 9 en tant que matériau de support.

11. Matériau d'enregistrement à cristaux liquides comprenant le produit poreux en résine durci selon l'une quelconque des revendications 6 à 9 en tant que matériau de support.

Fig.1

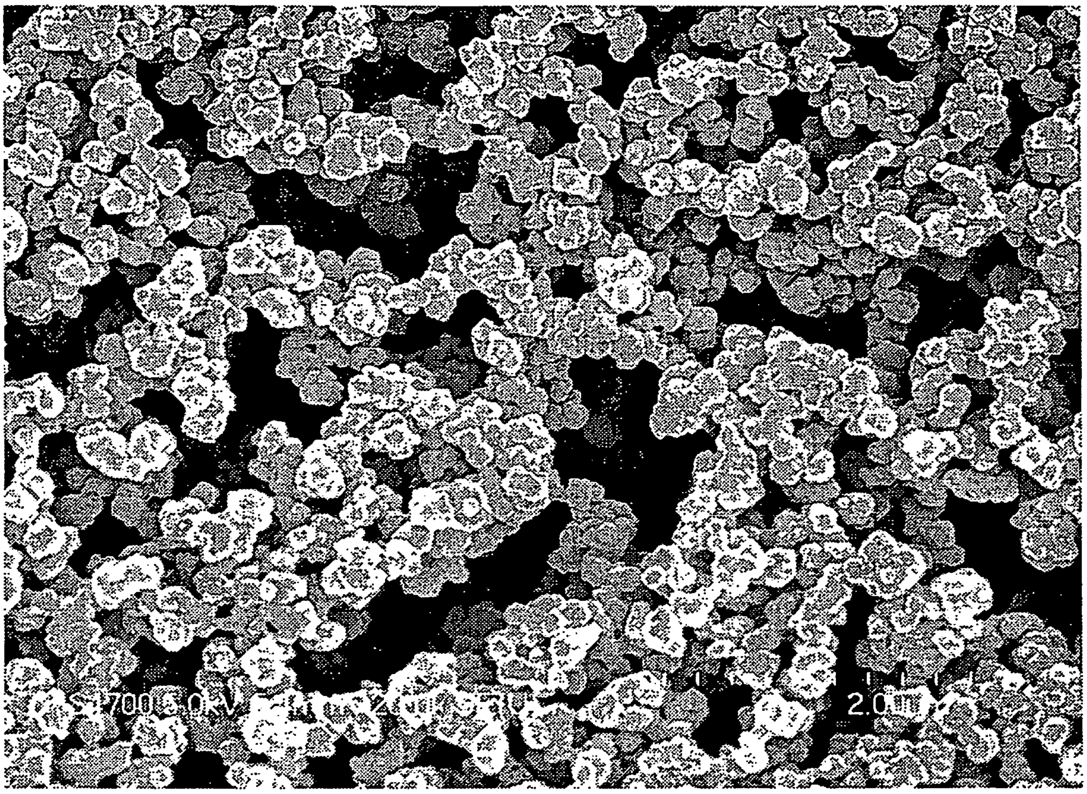

Fig. 2

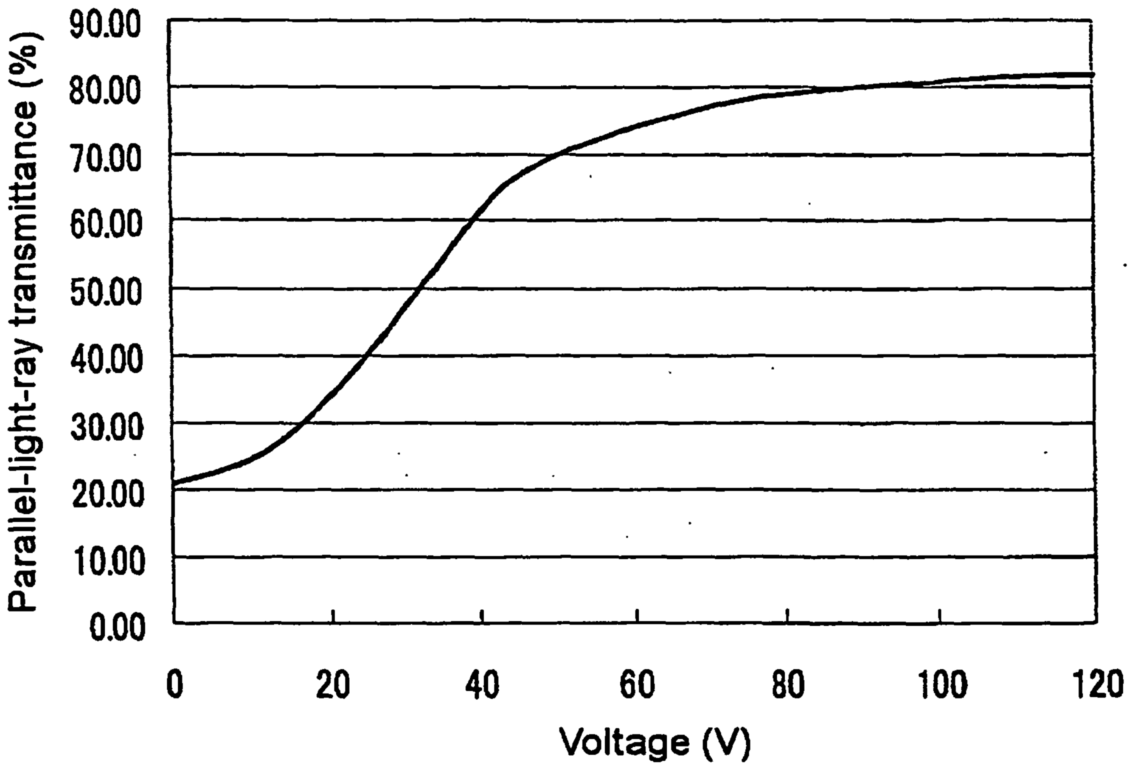
Parallel-light-ray transmittance (%)
90.00
80.00
70.00
60.00
50.00
40.00
30.00
20.00
10.00
0.00
0
20
40
60
80
100
120
Voltage (V)

Fig.3

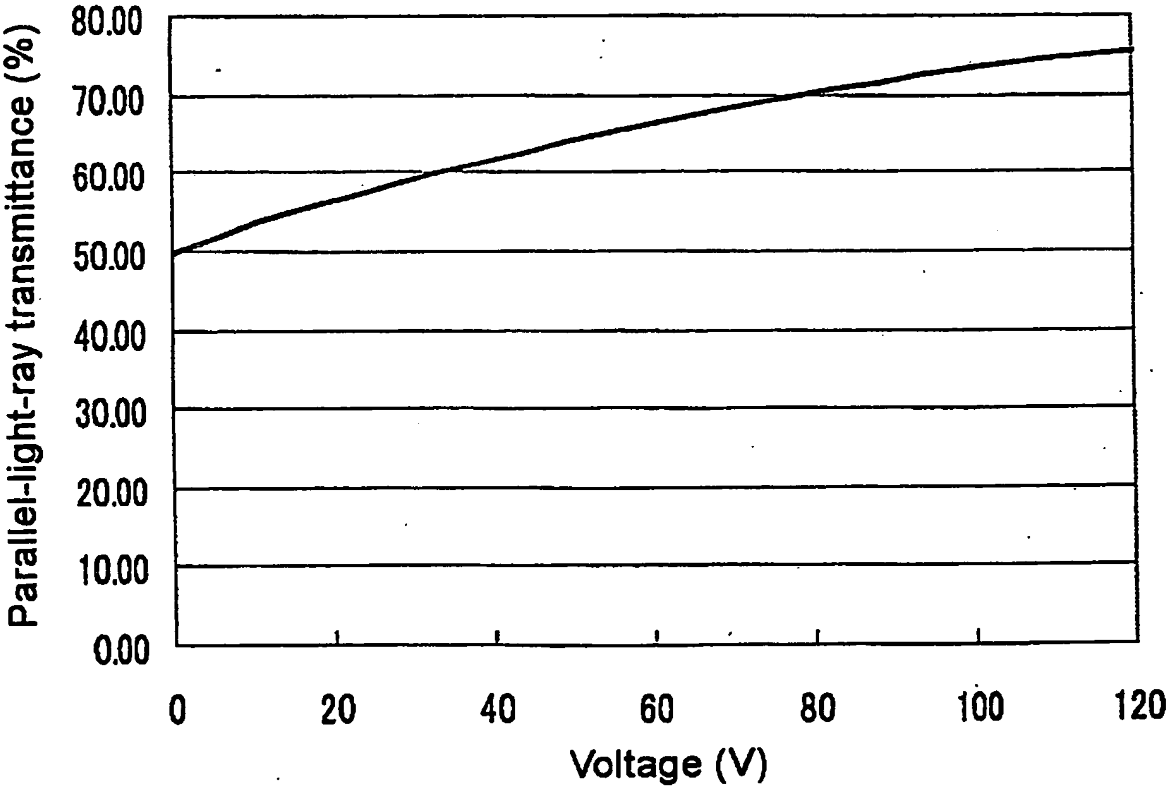
Parallel-light-ray transmittance (%)
80.00
70.00
60.00
50.00
40.00
30.00
20.00
10.00
0.00
0
20
40
60
80
100
120
Voltage (V)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6073229 A
- JP 2000288367 A